# EUROPEAN PATENT APPLICATION

(11) **EP 4 763 874 A1**
(43) Date of publication of application: **24.06.2026**
(21) Application number: 24220846.0
(22) Date of filing: 18.12.2024
(51) Int. Cl.: C08F 8/28, C08F 8/44, C08F 216/38

(54) **CATIONIC POLYMERS FOR ANION EXCHANGE MEMBRANES**

(71) Applicant: AGFA-GEVAERT NV, 2640 Mortsel (BE)
(72) Inventor: LOCCUFIER, Johan, 2640 Mortsel (BE); VAN DINGENEN, Wim, 2640 Mortsel (BE)
(74) Representative: Goethals, Fabienne

(57) **Abstract**

An ethylene-vinyl alcohol (EVOH) copolymer comprising
a. repeating units derived from ethylene,
b. repeating units derived from vinyl alcohol, and
c. repeating units represented by General Formula I and/or General Formula II, 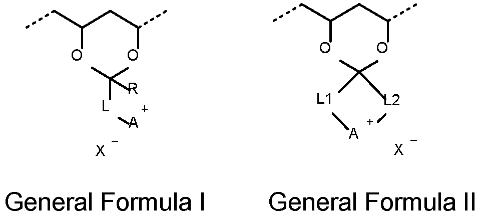 wherein
• L is a divalent linking group comprising not more than 20 carbon atoms;
• L1 and L2 are divalent linking groups comprising the necessary carbon atoms to form a five or six membered cationic ring with A⁺;
• A⁺ is a cationic group selected from the group consisting of ammonium, phosphonium and sulfonium;
• R is selected from the group consisting of a hydrogen, an alkyl group, an alkenyl group, an alkynyl group, an aralkyl group, an alkaryl group, an aryl or heteroaryl group, and a five- to eight-membered cyclic group;
• X is an anion.

## Description

### Technical Field

The present invention relates to the field of anion exchange membranes, more specifically to cationic polymers for the production thereof. The invention has potential applications in water electrolysis.

### Background Art

Anion Exchange Membranes (AEMs) are critical components in a variety of electrochemical applications, including fuel cells, water electrolysis, and energy storage systems. These membranes facilitate the selective transport of anions (such as OH⁻, Cl⁻, or CO₃²⁻) while blocking cations, providing a pathway for ion exchange that is essential for maintaining the electrochemical reactions necessary for energy conversion processes.

The importance of AEMs lies in their ability to enable efficient, low-cost, and environmentally friendly energy solutions. Unlike proton exchange membranes (PEMs) that rely on expensive platinum-based catalysts, AEMs allow the use of cheaper non-platinum catalysts, significantly reducing the overall cost of electrochemical systems. Additionally, AEM-based technologies operate in alkaline environments, which are inherently more stable and less corrosive than acidic environments, further enhancing the durability and sustainability of these systems.

Despite their potential, anion exchange membranes (AEMs) face several significant challenges. One major limitation is their chemical stability in alkaline conditions. Over time, the membrane material degrades, leading to a loss of performance and a reduced lifespan. Additionally, the mechanical properties of the polymers used in AEMs must be adapted to withstand strong alkaline environments while still being easy to handle. Therefore, balancing the required chemical and mechanical properties of AEMs remains a crucial area of research.

Different designs for AEM polymers have been disclosed in literature, based on e.g. SEBS, poly(ether sulfone), poly(ether ketone), polypropylene oxide, poly(aryl piperidinium), and sterically hindered poly(aryl imidazolium).

In WO2019209959 (Rensselaer Polytechnic Institute) SEBS triblock copolymers are crosslinked and functionalized with quaternary ammonium groups for an enhanced stability and durability.

WO2019076860 (EVONIK) discloses poly(ether ketone) derivatives containing benzimidazolium units for anion exchange membranes and WO2021013694 (EVONIK) describes poly(ether ketone) derivatives containing a spiro or piperidine structural unit as anion conducting membranes. The membranes have a high mechanical stability and low swelling characteristics, as well as a quite high anion conductivity.

WO2017117678 (IONOMR) and WO20188023097 (IONOMR) describe a cationic membrane comprising a more alkaline-stable cationic group that can be used in anion exchange resins, based on methylated polybenzimidazoles, sterically hindered by the introduction of methyl groups in both ortho-positions of the linking 2-phenyl group.

EP4424665 (AGFA-GEVAERT) discloses a cationic amidinium-functionalized compound that has an improved stability under alkaline conditions because of a steric protection of the cationic amidinium group. The steric protection prevents hydrolysis at the central carbon atom, and the high pKa of amidines prevents dealkylation reactions.

In AEM water electrolysis, membranes require cationic polymers that can operate effectively in highly alkaline environments. While many polymers exhibit flexibility and durability under neutral conditions, their mechanical properties can change in an alkaline medium. Specifically, the polymers may become brittle in such conditions due to anion exchange effects, such as the Hofmeister effect, which can significantly impact membrane performance and lifespan.

There is therefore still a need to design cationic polymers specifically designed for enhanced mechanical properties and resilience in alkaline media. The polymers need to retain their structural integrity and flexibility without becoming brittle in high-pH conditions, while maintaining strong cationic functionality.

### Summary of invention

It is an object of the invention to provide a cationic polymer that has an improved chemical and mechanical stability under alkaline conditions.

This object is realised by the EVOH copolymer as defined in claim 1.

It is a further object of the invention to provide a method for the preparation of such cationic polymer.

Further objects of the invention will become apparent from the description hereinafter.

### Description of embodiments

### Definitions

The term "monofunctional" in e.g. monofunctional polymerizable compound means that the polymerizable compound includes one polymerizable group.

The term "difunctional" in e.g. difunctional polymerizable compound means that the polymerizable compound includes two polymerizable groups.

The term "polyfunctional" or "multifunctional" in e.g. polyfunctional polymerizable compound means that the polymerizable compound includes more than two polymerizable groups.

The term "alkyl group" means a functional group with all variants possible for each number of carbon atoms in the alkyl group, i.e. for one carbon atom: methyl, for two carbon atoms: ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified, a substituted or unsubstituted alkyl group is preferably a C1 to C6-alkyl group, more preferably a C1 to C4-alkyl group and most preferably a methyl group or ethyl group.

The term "alkoxy group" means a functional group with all variants possible for each number of carbon atoms in the alkoxy group, i.e. for one carbon atom: methoxy, for two carbon atoms: ethoxy, for three carbon atoms: n-propoxy and isopropoxy; for four carbon atoms: n-butoxyl, isobutoxy and tertiary-butoxy; etc. Unless otherwise specified, an alkoxy-group is preferably a C1 to C6-alkoxy group, wherein a methoxy group and an ethoxy group are particularly preferred.

The term "alkenyl group" means a functional group derived from an alkene and has at least one carbon-carbon double bond. Unless otherwise specified, an alkenyl group is preferably a C2 to C6-alkenyl group.

The term "alkynyl group" means a functional group derived from an alkyne and has at least one carbon-carbon triple bond. Unless otherwise specified, an alkynyl group is preferably a C2 to C6-alkynyl group.

The term "aryl group" means a monocyclic or polycyclic aromatic ring structure comprising only carbon atoms in the aromatic ring structure. Unless otherwise specified, an aryl group is preferably a phenyl group (C6H5-), or a naphthyl group.

The term "aralkyl group" means an aryl group attached to an alkyl chain. Unless otherwise specified, an aralkyl group is preferably an aryl group attached to a C1 to C6-alkyl chain, more preferably a benzyl group (C6H5CH2-), where a phenyl group (C6H5-) is attached to a methylene group (-CH2-).

The term "alkaryl group" means a functional group having one or more alkyl groups attached to an aryl group. Essentially, it's the opposite of an aralkyl group. Unless otherwise specified, an alkaryl group is preferably a group having one, two, three or more alkyl groups attached to a phenyl group or a naphthyl group, more preferably a tolyl group (CH3C6H4-), where a methyl group (CH3-) is attached to a phenyl group.

The term "heteroaryl group" means a monocyclic or polycyclic aromatic ring comprising carbon atoms and one or more heteroatoms in the ring structure, preferably 1 to 4 heteroatoms independently selected from nitrogen, oxygen, selenium and sulphur.

Preferably, a heteroaryl group is a monocyclic ring, and more preferably a heteroaryl group is a five- or six-membered ring substituted by one, two or three oxygen atoms, nitrogen atoms, sulphur atoms, selenium atoms or combinations thereof.

Preferred examples of heteroaryl groups include, but are not limited to, pyridinyl, pyridazinyl, pyrimidyl, pyrazyl, quinolyl, triazinyl, pyrrolyl, pyrazolyl, imidazolyl, (1,2,3,)- and (1,2,4)-triazolyl, pyrazinyl, pyrimidinyl, tetrazolyl, furyl, thienyl, isoxazolyl, thiazolyl, isoxazolyl, and oxazolyl.

The term "alkylene group" means a bivalent functional group derived from an alkane by removing two hydrogen atoms from one or two carbon atoms, thereby creating two points of attachment.

Unless otherwise specified, an alkylene group is preferably a C₁ to C₂₀-alkylene group, more preferably a C₁ to C₁₀-alkylene group and most preferably a C₁ to C₆-alkylene group.

The term "arylene group" means a bivalent functional group derived from an aromatic hydrocarbon (arene) by removing a hydrogen atom from two ring carbon atoms.

Unless otherwise specified, an arylene group is preferably a phenylene group.

The term "heteroarylene group" means a bivalent functional group derived from a heteroarene by removing a hydrogen atom from two ring atoms. Heteroarenes are aromatic compounds where one or more carbon atoms in a ring are replaced by heteroatoms such as nitrogen, oxygen, or sulphur. Preferred examples of heteroarylene groups include, but are not limited to, pyridinylene, pyridazinylene, pyrimidylene, pyrazylene, quinolylene, triazinylene, pyrrolylene, pyrazolylene, imidazolylene, (1,2,3,)- and (1 ,2,4)-triazolylene, pyrazinylene, pyrimidinylene, tetrazolylene, furylene, thienylene, isoxazolylene, thiazolylene, isoxazolylene, and oxazolylene.

The term "cycloalkylene group" means a bivalent group derived from a cycloalkane by removing two hydrogen atoms from different carbon atoms in the ring. Unless otherwise specified, a cycloalkylene group is preferably a cyclohexylene group

The term "substituted", in e.g., a substituted alkyl group, means that the group may be substituted by other atoms than the atoms normally present in such a group, for an alkyl group: carbon and hydrogen. For example, a substituted alkyl group may thus include a halogen atom or a thiol group, while an unsubstituted alkyl group contains only carbon and hydrogen atoms. Unless otherwise specified, a substituted functional group of the functional groups listed above is preferably substituted by one or more constituents selected from the group consisting of an ester group, an amide group, an ether group, a thioether group, a ketone group, an aldehyde group, a sulfoxide group, a sulfone group, a sulfonate ester group, a sulfonamide group, -Cl, -Br, -I, -OH, -SH, -CN and -NO₂.

### EVOH copolymer

The ethylene-vinyl alcohol (EVOH) copolymer according to the present invention comprises:
a. repeating units derived from ethylene,
b. repeating units derived from vinyl alcohol, and
c. repeating units represented by General Formula I and/or General Formula II, 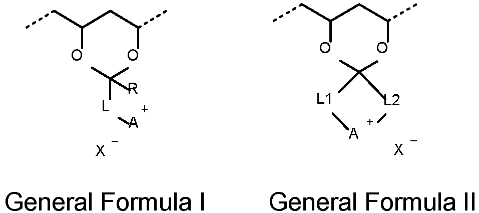 wherein
   - L is a divalent linking group comprising not more than 20 carbon atoms;
   - L1 and L2 are divalent linking groups comprising the necessary carbon atoms to form a five or six membered cationic ring with A⁺;
   - A+ is a cationic group selected from the group consisting of ammonium, phosphonium and sulfonium;
   - R is selected from the group consisting of a hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted aryl or heteroaryl group, and a five- to eight-membered cyclic group;
   - X- is an anion.

An AEM typically comprises a positively charged (i.e. cationic) polymer allowing transportation of anions, for example hydroxide ions, through the membrane. Besides a high ionic conductivity, the polymers used in AEM designs need sufficient mechanical strength over a wide range of temperatures and a high alkaline stability.

The EVOH copolymer according to the present invention comprises an ammonium, a phosphonium, or a sulfonium as cationic group A+. Preferably, the cationic group A+ is an ammonium group. An ammonium group allows more variations in the chemical design compared to phosphonium and sulfonium groups.

The ammonium group is preferably a tetra-alkyl ammonium, a sterically hindered (benz)imidazolium, a guanidinium or a sterically hindered amidinium group. When A⁺ is a tetraalkyl ammonium, it is preferably a cyclic ammonium group selected from the group consisting of a pyrrolidinium group and a piperidinium group. Pyrrolidinium and piperidinium groups might be more stable in an alkaline medium.

When A+ is a sterically hindered (benz)imidazolium group or a sterically hindered amidinium group, it is preferably represented by General Formula III, 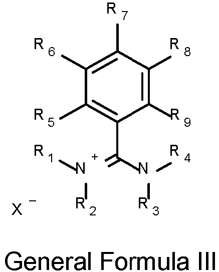 wherein
- R₅ and R₉ are any substituent different from hydrogen;
- R₁ to R₄ are independently selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted aryl group and a substituted or unsubstituted heteroaryl group, or any of R₁ and R₃, R₁ and R₄, R₁ and R₂, R₃ and R₄, R₂ and R₃, or R₂ and R₄ represent the necessary atoms to form an optionally substituted five- to eight-membered ring;
- R₆ to R₈ are independently selected from the group consisting of hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted aryl or heteroaryl group, a halogen group, an ether group, a nitro group, an amine group, or any of R₅ and R₆, R₆ and R₇, R₇ and R₈, or R₈ and R₉ represent the necessary atoms to form a five-to eight-membered ring;
- X- is an anion;

And wherein at least one of R₁ to R₉ comprises the necessary atoms to link the (benz)imidazolium or amidinium group to the EVOH copolymer.

When in General Formula III above, any of R₁ and R₃, R₁ and R₄, R₁ and R₂, R₃ and R₄, R₂ and R₃, or R₂ and R₄ represent the necessary atoms to form an optionally substituted five- membered aromatic ring, A⁺ is referred to as a sterically hindered imidazolium or benzimidazolium. In that case, A⁺ has a structure represented by General Formula IV, 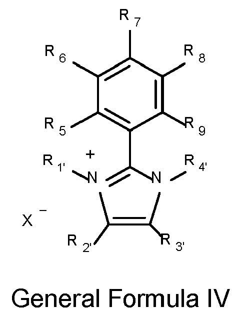 Wherein
- R₁' and R₄' are independently selected from the group consisting of a substituted or unsubstituted alkyl group, a substituted or unsubstituted alkenyl group, a substituted or unsubstituted alkynyl group, and a substituted or unsubstituted aralkyl group.
- R_{2'} and R_{3'} are independently selected from the group consisting of a hydrogen, a substituted or unsubstituted alkyl group, a substituted or unsubstituted alkenyl group, a substituted or unsubstituted alkynyl group, and a substituted or unsubstituted aralkyl group, a substituted or unsubstituted alkaryl group and a substituted or unsubstituted aryl or heteroaryl group, or R_{2'} and R_{3'} represent the necessary atoms to form a five- to eight-membered ring.
- R₅ to R₉ are as described above for General Formula III.

And wherein at least one of R_{1'} to R_{4'} or R₅ to R₉ comprises the necessary atoms to link the (benz)imidazolium or amidinium group to the EVOH copolymer.

When R_{2'} and R_{3'} represent the necessary atoms to form an aromatic six-membered ring, A⁺ is referred to as a benzimidazolium.

The divalent linking group L of the EVOH copolymer preferably comprises not more than 20 carbon atoms. When L comprises more than 20 carbon atoms, the distance between the individual cationic groups A+ may become too large, which potentially results in an increased resistance and a reduced conductivity.

The L group is preferably selected from the group consisting of alkylene groups, ether functionalized alkylene groups, arylene groups and ether functionalized arylene groups.

When the EVOH copolymer has a structure according to general formula II, L1 and L2 are divalent linking groups comprising the necessary carbon atoms to form a five- or six- membered cationic ring with A+. Preferably, L1 and L2 are ethylene groups, forming a six-membered cationic ring with A+.

The EVOH copolymers of the present invention comprise an anion X⁻ to counterbalance the cationic charge of the compound. Without being limited thereto, X⁻ is selected from the group consisting of iodide, bromide, chloride, fluoride, triiodide, hydroxide, carbonate, bicarbonate, cyanide, acetate, nitrate, sulfate, alkyl sulfate, perfluorinated alkylsulfonate, arylsulfonate, perchlorate, tetrachloroaluminate, tetrafluoroborate, alkyl borate, phosphate, halophosphate, alkyl phosphate, triflate, tosylate, mesylate, alkyl carboxylate, tetrakis(3,5-bis(trifluoromethyl)phenyl)borate, bis(trifluoromethane)sulfonamide, and any combination thereof.

A preferred anion is selected from the group of consisting of bromide, chloride, hydroxide, benzene sulfonate, tosylate, and mesylate.

The EVOH copolymer preferably comprises at least 10 mol% ethylene units, more preferably at least 20 mol% ethylene units, most preferably at least 30 mol% ethylene units. When the EVOH copolymer comprises less than 10 mol% ethylene units, the copolymer may become too hydrophilic which might result in a difficult-to-manage swelling behavior of the membrane.

Preferably, the EVOH copolymer has a weight average molecular weight of at least 20.000 g.mol⁻¹, more preferably at least 50.000 g.mol⁻¹, and most preferably at least 70.000 g.mol⁻¹. A higher molecular weight may lead to better mechanical stability, reduced solubility, and enhanced durability, which are all critical for the efficient and long-lasting operation of water electrolysis system. However, a too high molecular weight could make the polymer difficult to process (e.g., dissolution, extrusion, or film casting).

Without being limited thereto, examples of EVOH copolymers according to the present invention are listed in Table 1 .

**Table 1**

| | |
|---|---|
| 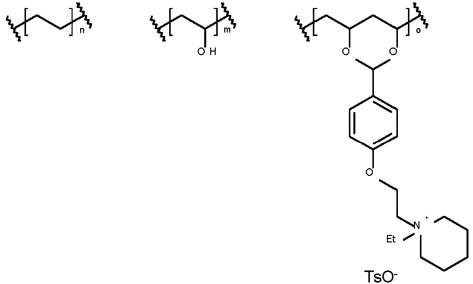 | EVOA-1 |
| 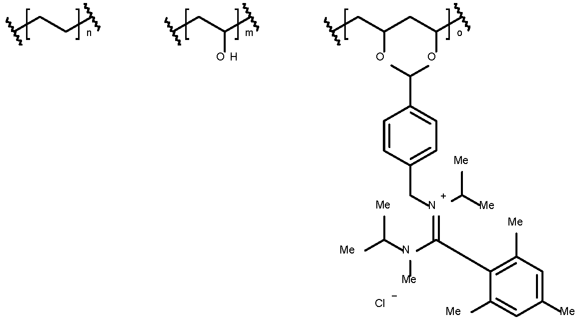 | EVOA-2 |
| 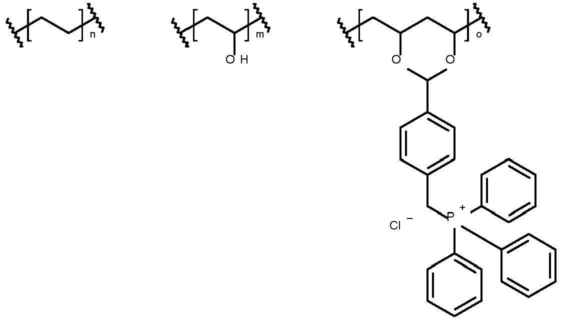 | EVOA-3 |
| 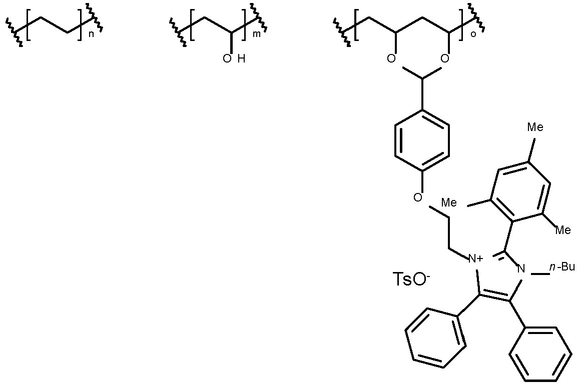 | EVOA-4 |
| 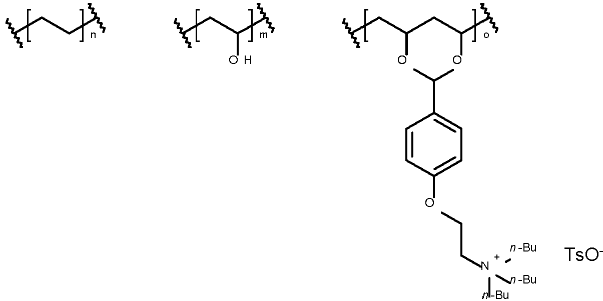 | EVOA-5 |
| 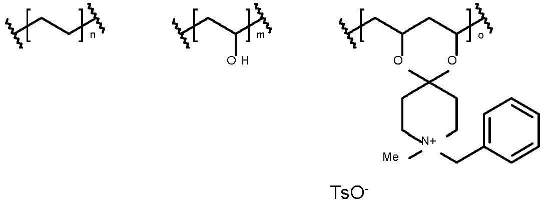 | EVOA-6 |
| 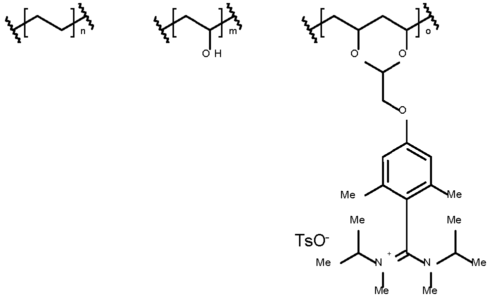 | EVOA-7 |
| 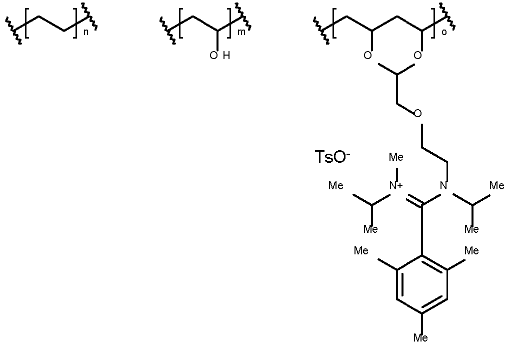 | EVOA-8 |
| 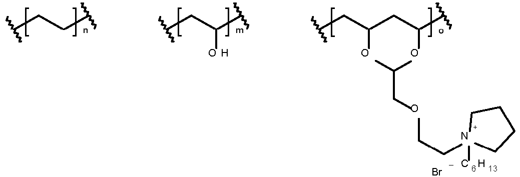 | EVOA-9 |
| 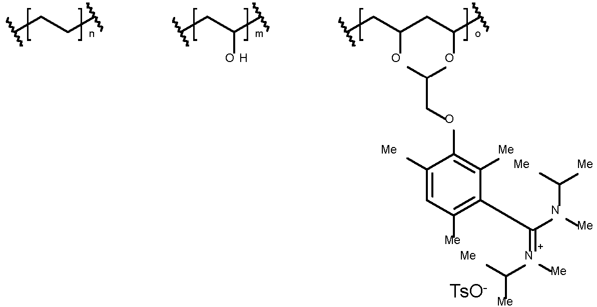 | EVOA-10 |

The EVOH copolymer according to the invention can be synthesized using various strategies. In a preferred approach, an acetal, ketal, aldehyde, or ketone functionalized with a cationic group A⁺ is prepared. This is then followed by functionalizing poly(ethylene-co-vinyl alcohol) with the prepared acetal, ketal, aldehyde, or ketone through acetalization or ketalization. Alternatively, a reactive ketone, aldehyde, acetal, or ketal can be used to functionalize poly(ethylene-co-vinyl alcohol) via acetalization or ketalization, and then further functionalized to introduce the cationic group A⁺.

In both of the above strategies, a poly(ethylene-co-vinyl alcohol) is functionalized through acetalization or ketalization of the alcohol function of the polymer. Preferably, at least 20 mol% of the vinyl alcohol repeating units of the poly(ethylene-co-vinyl alcohol) are converted into repeating units according to General Formula I or II, more preferably at least 30 mol%, most preferably at least 40 mol%. A high degree of functionalization may enhance conductivity. However, achieving 100% functionalization through post-functionalization reactions is virtually impossible.

### Polymer dispersion

In another aspect of the invention, the EVOH copolymer according to the present invention is provided in a dispersed form as a polymer dispersion. This polymer dispersion can be mixed with catalyst which, in turn, can be deposited on substrates, such as metallic porous structures and membranes. Following removal of the liquid medium, the polymer will act as binder of the catalyst onto the substrate (see further).

A polymeric dispersion can be provided both in aqueous and in solvent medium. Preferably, the polymer dispersion is an aqueous dispersion or is provided in an alcohol, such as ethanol. Preferably, the dispersion contains from 2.5 to 70 wt%, more preferably from 10 to 50 wt%, most preferably from 5 to 25 wt% of EVOH copolymer.

The EVOH copolymers according to the present invention can be self-dispersing by electrostatic forces or can be dispersed by means of a dispersing agent, which can be a polymeric dispersant or a non-polymeric surfactant. Dispersing agents can be non-ionic, cationic, or anionic. Since the EVOH copolymer is cationic in nature, a cationic or non-ionic dispersing agent is preferred. Suitable dispersants are DISPERBYK^{™} dispersants available from BYK CHEMIE, JONCRYL^{™} dispersants available from JOHNSON POLYMERS and SOLSPERSE^{™} dispersants available from Lubrisol. Another example is poly(diallyldimethylammonium chloride), also known as polyDADMAC. A detailed list of non-polymeric as well as some polymeric dispersants is disclosed by MCCUTCHEON. Functional Materials, North American Edition. Glen Rock,N.J.: Manufacturing Confectioner Publishing Co., 1990. p.110-129.

The polymeric dispersion can be obtained using any type of technique, such as solvent evaporation, milling, emulsion polymerization, mini-emulsion polymerization, or dispersion polymerization. Preferred dispersing techniques are solvent evaporation and mini-emulsion polymerization.

### Anion-exchange membrane

The ethylene-vinyl alcohol (EVOH) copolymer according to the present invention can be used for any application for which a cationic polymer is necessary, e.g., as a flocculant in (waste) water treatment, or as an additive in textile finishing. Preferably, the ethylene-vinyl alcohol (EVOH) copolymer is used to produce anion-exchange membranes (AEMs).

AEMs allow for the transportation of anions (e.g. OH⁻, Cl⁻, Br⁻) from the cathode to the anode in an electrochemical reaction. They can be used in any electrochemical process, selected from electrolysis, electrodialysis and fuel cell technology. Preferably, the anion-exchange membranes in the present invention are used for electrolysis, more preferably for water electrolysis. In water electrolysis, hydroxide ions (OH⁻) are transported through the AEM, along with water molecules. The AEMs according to the present invention can also be used in batteries, sensors, and actuators.

There is an important balance to be found between mechanical properties and conductivity of the AEM. Preferably, the AEM has a long lifespan, which can be achieved by membranes having good mechanical properties. A thicker membrane will typically improve the mechanical properties of the AEM and will reduce hydrogen and oxygen cross-over. The AEM membrane according to the present invention preferably has a dry thickness of 10 to 100 µm, more preferably from 20 to 80 µm, most preferably from 30 to 60 µm. When the AEM is wet, the membrane may swell, and the thickness can increase.

However, a too high thickness will result in a higher ionic resistance and thereby reduce the ion conductivity of the AEM. A high anion conductivity is required to support large currents with minimal resistive losses. The anion conductivity of the AEM according to the present invention is preferably more than 40 mS/cm, more preferably more than 70 mS/cm, most preferably more than 100 mS/cm at 60°C.. Operating temperatures for AEM water electrolyzers are between 40°C and 100°C, more preferably between 60°C and 80°C.

Not only the thickness of the AEM determines its mechanical properties, also the chemical structure of the used polymer, the crosslinking degree, and optional additives have an impact.

When the AEM comprises a chemically or physically crosslinked polymer, it preferably has a swelling ratio of 5 to 60%, more preferably, it has a swelling ratio of 10 to 50%, most preferably it has a swelling ratio of 20 to 40%. When the swelling ratio is lower, often the mechanical properties of the AEM are better.

The strength of the AEM is represented by its tensile strength. The tensile strength of the AEM according to the present invention is preferably from 10 to 50 MPa. More preferably, the tensile strength is from 12 to 40 MPa, most preferably from 15 to 34 MPa.

The anion-exchange membranes can be produced by any method known in the art, depending on the desired size and scale. Generally, any coating or casting technique can be used. Preferred techniques are slot dye coating, extrusion coating, and dip coating. A preferred method for making an AEM on a small scale is solution casting of a polymer solution and evaporating the solvent. Evaporation of the solvent can be facilitated by heating or by applying a vacuum, or a combination thereof. Another preferred method for making an AEM consists of coating of the polymer solution using a bar coater and coating knife. The processes can be performed under air or under nitrogen atmosphere.

A preferred large-scale production method for AEMs is slot dye coating.

The polymer solution used to prepare the AEM can be a solution of the EVOH copolymer according to the invention, obtained directly after the polymer synthesis. But when a higher purity is desired, it is also possible to isolate and purify the EVOH copolymer after its synthesis, and to redissolve it in a solvent of choice, such as for example methanol, propylene glycol, NMP, NBP, DMSO, DMF, THF, MEK, and dioxolane. In principle, any solvent can be used in which the polymer is soluble. It is also possible to dissolve the polymers in a mixture of solvents or in water-solvent mixtures. Preferred mixtures are water-isopropanol and water-ethanol. Preferably, the solvent or mixture of solvents has a boiling point below 175 °C.

It is also possible to manufacture the AEM using a solution of a poly(ethylene-co-vinyl alcohol), which is afterwards functionalized by acetalization or ketalization. In a first step, a non-ionic membrane is thus formed, which is then reacted with a suitable reactive ketone, aldehyde, acetal or ketal to obtain a cationic polymer membrane.

The anion exchange membrane according to the present invention can comprise a porous or a non-porous support, also referred to as a reinforcing support. Without being limited thereto, the support can be selected from expanded polymer films such as expanded PTFE, and polymer wire meshes, which can be woven or non-woven. An AEM comprising a support has the advantage that the mechanical properties are further improved.

The process for preparing the anion-exchange membrane having a support preferably comprises impregnating or coating the support with a solution containing the polymer. Optionally, a curing reaction may be performed to cross-link the polymer and thus create an even more durable AEM.

### Electrochemical device comprising anion-exchange membrane

The AEM according to the present invention may be used in any electrochemical device, such as an electrolyser, a redox-flow battery, a fuel cell, or an electrodialysis system.

The AEM according to the present invention is preferably used in a water electrolyser.

An electrolysis cell typically comprises two electrodes, an anode, and a cathode, separated by a membrane. An electrolyte is present between both electrodes.

When electrical current is supplied to the electrolysis cell, hydroxyl ions of the electrolyte are oxidized into oxygen at the anode and water is reduced to hydrogen at the cathode. The hydroxyl ions formed at the cathode migrate through the membrane to the anode. The membrane limits transfer of hydrogen and oxygen formed during water electrolysis, from cathode to anode and from anode to cathode respectively.

The AEM water electrolyser can be operated in pure water. The AEM water electrolyser can also be operated in an electrolyte solution, which is typically an alkaline solution. Preferred electrolyte solutions are aqueous solutions of electrolytes selected from sodium hydroxide or potassium hydroxide. Potassium hydroxide electrolytes are often preferred due to their higher specific conductivity. The concentration of the electrolyte in the electrolyte solution is preferably between 0.01 mol/L and 2 mol/L. Consequently, the pH of the electrolyte solution is between 7 and 14, more preferably between 7 and 12.

The temperature of the electrolyte solution is preferably from 35 °C to 100 °C, more preferably from 40 °C to 80 °C, most preferably from 45 to 60 °C.

An electrode typically includes a substrate provided with a so-called catalyst layer. The catalyst layer can be the same or different for the anode, where oxygen is formed, and the cathode, where hydrogen is formed.

Typical electrode substrates are made from electrically conductive materials selected from the group consisting of nickel, iron, soft steels, stainless steels, vanadium, molybdenum, copper, silver, manganese, platinum group elements, graphite, and chromium. The substrates may be made from an electrically conductive alloy of two or more metals or a mixture of two or more electrically conductive materials. A preferred material is nickel or nickel-based alloys. Nickel has a good stability in strong alkaline solutions, has a good conductivity and is relatively cheap.

The catalyst layer preferably is selected from nickel, cobalt, iron, or platinum group elements. The catalyst layer may include these elements as elemental metals, compounds (e.g. oxides), composite oxides or alloys made of multiple metal elements, or mixtures thereof. Preferred catalyst layers include plated nickel, plated alloys of nickel and cobalt or nickel and iron, complex oxides including nickel and cobalt such as LaNiO3, LaCoO3, and NiCo2O4, compounds of platinum group elements such as iridium oxide, or carbon materials such as graphene.

A particularly preferred catalyst layer comprises Raney Nickel. The Raney nickel structure is formed by selectively leaching aluminium or zinc from a Ni-Al or Ni-Zn alloy. Lattice vacancies formed during leaching result in a large surface area and a high density of lattice defects, which are active sites for the electrocatalytic reaction to take place.

Preferred porous electrodes and methods to prepare them are disclosed in for example EP-A 3575442, paragraphs 23 to 84.

The pore size of porous electrodes may have an influence on the electrolysis efficiency. For example, in EP-A 3575442 it is disclosed that preferred pore sizes of the porous electrodes are from 10 nm up to 200 nm.

The catalyst layer can also include organic substances such as polymers to improve the durability and the adhesion towards the substrate. The polymer in the catalyst layer is preferably similar to the polymer of the AEM membrane. Most preferably, the polymer in the catalyst layer is an EVOH copolymer. The EVOH copolymer of the catalyst layer is preferably provided in the form of a polymeric dispersion as referred to above.

The catalyst layer may also be provided on a surface of the membrane, resulting in a so-called Catalyst Coated Membrane (CCM). Such a CCM may have an improved contact surface between the membrane surface and the catalyst layer resulting in a higher electrolysis efficiency.

The catalyst layer may be applied on the membrane surface by any deposition technique such as coating, spraying, inkjet printing, gravure printing, screen printing, 3D printing, or vapour deposition techniques.

A typical AEM water electrolyser includes several electrolytic cells, also referred to as stack of electrolytic cells.

Regarding the cell configuration, two types of electrolysers are typically used.

A unipolar (or "tank- type") electrolyser consists of alternate positive and negative electrodes held apart by a membrane. Positive electrodes are all coupled together in parallel, as are the negative electrodes, and the whole assembly is immersed in a single electrolyte bath ("tank") to form a unit cell. A plant-scale electrolyser is then built up by connecting these units electrically in series. The total voltage applied to the whole electrolysis cell is the same as that applied to the individual unit cells.

On the other hand, in a bipolar electrolyser a metal sheet (or "bipole") connects electrically adjacent cells in series. The electrocatalyst for the negative electrode is coated on one face of the bipole and that for the positive electrode of the adjacent cell is coated on the reverse face. In this case, the total cell voltage is the sum of the individual unit cell voltages. Therefore, a series-connected stack of such cells forms a module that operates at a higher voltage and lower current than the tank-type (unipolar) design. To meet the requirements of a large electrolysis plant, these modules are connected in parallel to increase the current.

Membrane Electrode Assemblies (MEA) can also be used in an electrolyser. Such MEAs are typically prepared by applying a membrane, preferably without a reinforcing support, on at least one porous electrode. Such MEAs are for example disclosed in EP-A 2831312 (Agfa Gevaert), EP3277862 (De Nora) and WO2020/158719 (Nippon Shokubai). Such MEAs may also be used in the electrolysis method according to the present invention.

### Examples

### Materials

All materials used in the following examples were readily available from standard sources such as MERCK and TCI CHEMICALS unless otherwise specified. The water used was deionized water.

EVAL Resin SP521B is an EVOH, comprising 27 mol% ethylene units, supplied by Kuraray Co., Ltd.

SOARNOL E3808 is an EVOH, comprising 38 mol% ethylene units, supplied by Nippon Gohsei Co., Ltd.

### Evaluation methods

### Molecular mass

The molecular mass was determined using TLC-MS, according to the following procedure. A TLC was run under circumstances given in the synthetic examples. The TLC was analyzed using a CAMAG ^{™} TLC-MS interface coupled to an AmaZon ^{™} SL mass spectrometer (supplied by Brüker Daltonics) via an Agilent ^{™} 1100 HPLC pump. First a blank spectrum was taken by eluting a spot on the TLC plate where no compounds are present with a 0.01 molar solution of ammonium acetate in methanol. A second spectrum of the compound to be analyzed was taken by eluting the spot of the compound under consideration with a 0.01 molar solution of ammonium acetate in methanol. The first spectrum was subtracted from the second spectrum, giving the spectrum of the compound to be analyzed.

### Example 1: the synthesis of EVOA-1

### The synthesis of INT-1.1

15 g (0.1 mol) (4-(2-hydroxy-ethoxy)benzaldehyde was dissolved in 100 ml methylene chloride. 20.2 g (0.2 mol) triethyl amine was added and the reaction mixture was cooled to 10°C. A solution of 28.5 g (0.15 mol) tosyl chloride in 200 ml methylene chloride was added dropwise, while maintaining the temperature around 10°C. The reaction mixture was allowed to heat up to room temperature and the reaction was allowed to continue for 21 hours at room temperature. The reaction mixture was extracted three times with 100 ml water, dried over MgSO₄ and evaporated under reduced pressure. The residue was redissolved in methylene chloride and INT-1.1 was crystallized from the medium by adding n.-hexane. The crystallized INT-1.1 was isolated by filtration and dried. 21.2 g (y : 74 %) of INT-1.1 was isolated (TLC analysis on a TLC Silicagel 60 F254 plate supplied by Merck, eluent n.-hexane/ethyl acetate 50/50, Rf : 0.39).

### The synthesis of INT-1.2

15 g (46.8 mmol) INT-1.1 was dissolved in 50 ml sulfolane. 10.21 g (0.103 mmol) N-ethyl-piperidine was added and the reaction mixture was heated to 100°C. The reaction was allowed to continue for 20 hours at 100°C. The reaction mixture was allowed to cool down to room temperature, upon which INT-1.2 partially crystallized. 600 ml methyl tert.butyl ether was added in two portions of 300 ml and INT-1.2 was isolated by filtration. The residue was treated twice with 300 ml methyl tert.butyl ether using sonification. INT-1.2 was isolated by filtration and dried. 18.05 g (y : 89 g) of INT-1.2 was isolated (TLC analysis on Uniplate RP18 plate, eluent methanol/1M NaCl 70/20, Rf : 0.58). The structure was further confirmed using TLC-MS.

### The synthesis of EVOA-1

0.633 g EVAL Resin SP521B was dissolved in 5 ml dimethyl formamide at 110°C. 35 mg methane sulfonic acid was added. The reaction temperature was lowered to 85°C. 0.557 g (5.24 mmol) dimethoxypropane was added. A solution of 1.26 g (2.91 mmol) INT-1.2 in 11 ml dimethyl formamide was added and the reaction was allowed to continue for 45 minutes at 87°C. An additional 35 mg methane sulfonic acid was added, and the reaction was allowed to continue for 18 hours at 87°C. An additional 1.24 g (11.6 mmol) dimethoxypropane and an additional 50 mg methane sulfonic acid was added, and the reaction was allowed to continue for 2 hours at 87°C. The reaction was monitored using TLC (TLC analysis on Uniplate RP18 plate, eluent methanol/1M NaCl 70/20) to monitor the conversion of INT-1.2 up to the level where the concentration of INT-1.2 remained constant. The reaction mixture was allowed to cool down to room temperature and 152 mg tetramethyl guanidine was added. EVOA-1 was precipitated in a mixture of 1000 ml 0.5 M NaCl and 100 ml 1-methoxy-2-propanol. The polymer was isolated and dried. 0.705 g of EVOA-1 was isolated. The structure was confirmed by 1H-NMR spectroscopy in CDCl3. The degree of acetalization was determined by 1H-NMR spectroscopy, where the first spectrum was measured in CDCl3 followed by a second measurement in CDCl3 after the addition of CF3COOH to shift the OH protons in the spectrum. 41 mol% of the diols were converted into an acetal.

### Example 2: the synthesis of EVOA-2

### The synthesis of INT-2.1

5.9 g 36.3 mmol) 4-chloromethyl benzaldehyde was dissolved in 50 ml sulfolane. 8.93 g (36.3 mmol) N,N'-diisopropyl-2,4,6-trimethyl-benzamidine (prepared as disclosed in EP4424665) was added and the reaction mixture was heated to 125°C. The reaction was allowed to continue for 17 hours at 125°C. The reaction mixture was allowed to cool down to room temperature. 200 ml methyl tert.butyl ether was added to the reaction mixture and stirred for 15 minutes. The ether fraction was isolated and the sulfolan phase was treated again with 200 ml methyl tert.butyl ether. The ether fraction was isolated, and the ether fractions were pooled. The solvent was removed under reduced pressure and 13.96 g of the crude INT-2.1 was isolated. The crude INT-2.1 was purified by preparative column chromatography on a FlashPure C18 flash column, using methanol/1M ammonium acetate 60/40 as eluent. The pure fractions were pooled, and the methanol was evaporated under reduced pressure. The pH was adjusted to pH = 13 using a 10 N NaOH solution and the mixture was extracted with methyl tert.butyl ether. The ether fraction was dried over MgSO4 and evaporated under reduced pressure. 3.42 g (y : 26 %) of INT-2.1 was isolated (TLC analysis on Uniplate RP18 plate, eluent methanol/1M NaCl 75/25, Rf : 0.47). The structure was further confirmed using TLC-MS.

### The synthesis of INT-2.2

A mixture of 3.28 g (9 mmol) INT-2.1 and 11 g (54 mmol) methyl tosylate was heated to 120°C and the reaction was allowed to continue for 20 hours at 120°C. The reaction mixture was allowed to cool down to room temperature and 35 ml water was added. The pH was adjusted to 13 using a 10 N NaOH solution. The mixture was extracted with 70 methyl tert.butyl ether. The ether fraction was extracted with 100 ml water, adjusted to a pH of 13 using a 10 N NaOH solution. The pooled water fractions were extracted with 100 ml methyl tert.butyl ether, followed by an extraction with 200 ml methylene chloride. The methylene chloride fraction was dried over MgSO4 and evaporated under reduced pressure. 1.7 g (y : 34 %) of INT-2.2 was isolated. (TLC analysis on Uniplate RP18 plate, eluent methanol/1M NaCl 75/25, Rf : 0.35). The structure was further confirmed using TLC-MS. A minor contaminant (CONT-1) was detected (Rf: 0.26), of which the structure is shown below. The contaminant is not reactive in the next step. Therefore, it was decided not to further purify INT-2.2.

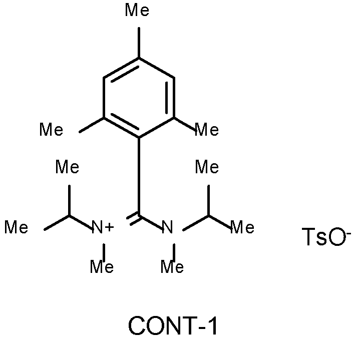

### The synthesis of EVOA-2

0.633 g g EVAL Resin SP521B was dissolved in 5 ml dimethyl formamide at 110°C. 35 mg methane sulfonic acid was added. A separate solution of 1.6 g (2.91 mmol) INT-2.2 in 4 ml dimethyl formamide was made and half of the solution was added to the reaction mixture. The reaction temperature was lowered to 85°C and 0.557 g (5.24 mmol) dimethoxypropane was added. The reaction was allowed to continue for 90 minutes at 95°C. After 90 minutes, the second half of the solution was added followed by the addition of 0.557 g (5.24 mmol) dimethoxypropane. The reaction was allowed to continue for an hour at 87°C. The reaction was followed with TLC chromatography on Uniplate RP18 plate using methanol/1M NaCl 80/20 as eluent. 45 mg of tetramethyl guanidine was added and the reaction mixture was allowed to cool down to room temperature. EVOA-2 was precipitated in a mixture of 1500 ml water and 1500 ml 2-methoxy-1-propanol. EVOA-2 was isolated by filtration and dried. 1.1 g of EVOA-2 was isolated.

### Example 3: the synthesis of EVOA-4

### The synthesis of INT-4.1

53.1 g (0.25 mol) benzil, 39 g (0.26 mol) 2,4,6-trimethylbenzaldehyde and 49.3 g (0.64 mol) ammonium acetate were added to 375 ml acetic acid. The mixture was stirred and heated to 87°C. After four hours, an additional 9.64 g (0.125 mol) ammonium acetate was added. After five and a half hours extra, an additional 9.64 g (0.125 mol) ammonium acetate was added, and the reaction was allowed to continue for an addition 17 hours. The reaction mixture was allowed to cool down to room temperature upon which INT-4.1 crystallized from the medium. INT-4.1 was isolated by filtration, washed with acetone and 500 ml water and dried. 41.5 g (y : 49 %) of INT-4.1 was isolated (TLC analysis on a TLC Silicagel 60 F254 plate supplied by Merck, eluent n.-hexane/ethyl acetate 80/20, Rf : 0.2). The structure was further confirmed using TLC-MS.

### The synthesis of INT-4.2

5.5 g (16.3 mmol) INT-4.1 was dissolved in 51 g tetrahydrofuran. 3.25 g (81.3 mmol) NaOH was added followed by the addition of 4.84 g (34.8 mmol) n.-butyl bromide. The mixture was refluxed for 3 hours. The reaction mixture was allowed to cool down to room temperature. The volatile components were removed under reduced pressure. The residue was dissolved in 50 ml methylene chloride and 50 ml water. The methylene chloride fraction was isolated and extracted twice with 50 ml water. The methylene chloride fraction was isolated, dried over MgSO4 and evaporated under reduced pressure. 5.51 g (y : 86%) of INT-4.2 was isolated (TLC analysis on a TLC Silicagel 60 F254 plate supplied by Merck, eluent n.-hexane/ethyl acetate 80/20, Rf : 0.25). The structure was further confirmed using TLC-MS.

### The synthesis of INT-4.3

4.47 g (13.9 mmol) INT-1.1 and 5.5 g (13.9 mmol) INT-4.2 were dissolved in 42.5 ml sulfolane. The reaction mixture was heated to 115°C and the reaction was allowed to continue for 20 hours at 115°C. The reaction mixture was allowed to cool down to room temperature. The reaction mixture was treated three times with 150 ml methyl tert.butyl ether. Each time the sulfolane fraction was isolated. The sulfolane fraction was added to 200 ml water and the pH was adjusted to 13, using a 10 N NaOH solution. The mixture was extracted with 150 ml methyl tert.butyl ether, followed by an extraction 150 ml methylene chloride. The methylene chloride fraction was isolated, dried over MgSO4 and evaporated under reduced pressure. 7.2 g (y : 72 %) of INT-4.3 was isolated (TLC analysis on Uniplate RP18 plate, eluent methanol/1M NaCl 80/20, Rf : 0.42). The structure was further confirmed using TLC-MS.

### The synthesis of EVOA-4

0.487 g EVAL Resin SP521B was dissolved in 4 ml dimethyl formamide at 110°C. 27 mg methane sulfonic acid was added. The reaction temperature was lowered to 85°C and 0.428 g (4.03 mmol) dimethoxypropane was added. A solution of 1.6 g (2.24 mmol) INT-4.3 in 4 ml dimethyl formamide was added over 15 minutes and the reaction was allowed to continue for 2 hours at 87°C. The reaction was followed with TLC chromatography on Uniplate RP18 plate using methanol/1M NaCl 80/20 as eluent. The reaction mixture was allowed to cool down to room temperature and 34 mg tetramethyl guanidine was added. EVOA-4 was precipitated in a mixture of 750 ml water and 75 ml 1-methoxy-2-propanol. The polymer was isolated and redissolved in 150 ml methylene chloride. The methylene chloride fraction was extracted with 100 ml water, dried over MgSO4 and evaporated under reduced pressure. 0.810 g of EVOA-4 was isolated.

### Example 4: the synthesis of EVOA-7

### The synthesis of INT-7.1

5.03 g (24.8 mmol) 4-bromo-3,5-dimethyl-phenol was dissolved in 10 ml methanol. 4.46 g (24.8 mmol) of a 30 w% sodium methanolate solution in methanol was added and the solution was stirred for 15 minutes. The methanol has been removed under reduced pressure and 5.3 g of 4-bromo-3,5-dimethyl-phenol sodium salt was isolated. 5.3 g (23.8 mmol) 4-bromo-3,5-dimethyl-phenol sodium salt was dissolved in 25 ml sulfolane. 4.14 g (23.7 mmol) bromo-acetaldehyde dimethyl acetal was added, and the reaction mixture was heated to 95°C. The reaction was allowed to continue for 18 hours at 95°C. The reaction was further heated to 111°C and the reaction was allowed to continue for an additional 2 hours. An additional 0.413 g (2.44 mmol) bromo-acetaldehyde dimethyl acetal was added, and the reaction was allowed to continue for an additional two hours at 111°C. The reaction mixture was allowed to cool down to room temperature. The precipitated salts were removed by filtration. 50 ml methylene chloride and 50 ml water were added to the mixture. The methylene chloride fraction was isolated, dried over MgSO4 and evaporated under reduced pressure. 150 ml n.-hexane was added to the residue and stirred for 20 hours. The n.-hexane fraction was isolated, and the residue was again treated with 200 n.-hexane. The n.-hexane fractions were pooled, dried over MgSO4 and evaporated under reduced pressure. 4.1 g (y : 60%) of INT-7.1 was isolated (TLC-analysis on a Uniplate RP18 plate, eluent methanol/1M NaCl 70/30, Rf : 0.1). The structure was further confirmed using TLC-MS.

### The synthesis of INT-7.2

4 g (13.8 mmol) of INT-7.1 was dissolved in 10 ml dry tetrahydrofuran. The reaction mixture was flushed with nitrogen and cooled to -35°C. 6.1 ml of a 2.5 M solution of butyl lithium in n.-hexane (15.2 mmol) was added over 10 minutes. The reaction was allowed to continue for an additional 20 minutes at -35°C. A solution of 1.78 g (13.8 mmol) N,N-diisopropyl carbodiimide in 3 ml dry tetrahydrofuran was added over 20 minutes while maintaining the temperature at -35°C. The reaction was allowed to continue for 20 minutes at -35°C, followed by 3 hours reaction at room temperature. The reaction mixture as cooled to 7°C and 1 ml methanol was added dropwise. The precipitated salts were removed by filtration and 100 ml water was added. The mixture was extracted with 150 ml methyl tert.butyl ether. The ether fraction was isolated, dried over MgSO4 and evaporated under reduced pressure. The crude INT-7.2 was purified by preparative column chromatography on a FlashPure C18 column, using methanol/1M ammonium acetate as eluent. The pooled product fractions were evaporated under reduced pressure and the residue was dissolved in water. The pH was adjusted to 12.5 using a 10 N NaOH solution, followed by extraction with methyl tert.butyl ether. The ether fraction was dried over MgSO4 and evaporated under reduced pressure. 2.99 g of INT-7.2 (y : 64 %) was isolated (TLC analysis on a Uniplate RP18 plate, eluent methanol/1M NaCl 70/30, Rf : 0.5). The structure was further confirmed using TLC-MS.

### The synthesis of INT-7.3

1.35 g (4 mmol) INT-7.2 was dissolved in 5 ml sulfolane. 0.845 g (4.4 mmol) methyl tosylate was added and the reaction mixture was heated to 120°C. The reaction was allowed to continue for 3 hours at 120°C. The reaction mixture was allowed to cool down to room temperature and 50 ml water was added. The pH was adjusted to pH=13 using a 10 N NaOH solution and the mixture was extracted with 250 ml methyl tert.butyl ether. The ether fraction was dried over MgSO4 and evaporated under reduced pressure. The crude INT-7.3 was purified by preparative column chromatography on a FlashPure C18 flash column, using methanol/1M ammonium acetate 70/30 as eluent. The pooled product fractions were evaporated under reduced pressure and the residue was dissolved in water. The pH was adjusted to 12.5 using a 10 N NaOH solution, followed by extraction with methyl tert.butyl ether. The ether fraction was dried over MgSO4 and evaporated under reduced pressure. 1 g (y : 71 %) of INT-7.3 was isolated (TLC analysis on a Uniplate RP18 plate, eluent methanol/1M NaCl 70/30, Rf : 0.4). The structure was further confirmed using TLC-MS.

### The synthesis of INT-7.4

A mixture of 0.95 g (2.83 mmol) INT-7.3 and 3.263 (17 mmol) methyl tosylate was heated to 120°C. The reaction was allowed to continue for one hour. The reaction was allowed to cool down to room temperature and 50 ml water was added to the reaction mixture. The pH was adjusted to 13 using a 10 N NaOH solution and the reaction mixture was extracted with 250 ml methyl tert.butyl ether. The aqueous layer was isolated and extracted with 200 ml methylene chloride. The methylene chloride fraction was isolated, dried over MgSO4 and evaporated under reduced pressure. 0.99 g (y : 65%) of INT-7.4 was isolated (TLC analysis on a Uniplate RP18 plate, eluent methanol/1M NaCl 80/20, Rf : 0.52). The structure was further confirmed using TLC-MS. A minor contaminant (CONT-2) was detected (Rf : 0.37), of which the structure is shown below. The contaminant is not reactive in the next step. Therefore, it was decided not to further purify INT-7.4.

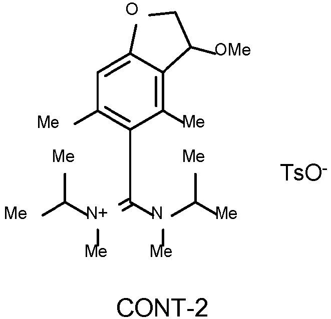

### The synthesis of EVOA-7

0.417 g EVAL Resin SP521B was dissolved in 3.3 ml dimethyl formamide at 115°C. 23 mg methane sulfonic acid was added. A separate solution of 1.03 g (1.92 mmol) INT-7.4, 20 µl water and 40 mg methane sulfonic acid was prepared was prepared and added to the reaction mixture and the reaction temperature was adjusted to 85°C. The reaction was allowed to continue for 18 hours at 85°C. The conversion was followed using TLC chromatography on a Uniplate RP18 plate, eluent methanol/1M NaCl 80/20. The reaction mixture was allowed to cool down to room temperature and EVOA-7 was precipitated in 250 ml methylene chloride. EVOA-7 was isolated and dried. 0.7 g of EVOA-7 was isolated.

### Example 5: the synthesis of EVOA-10

### The synthesis of INT-10.1

13.6 g (0.1 mol) 2,4,6-trimethylphenole was dissolved in 40 ml methanol. 18 g of a 30 w% solution of sodium methanolate in methanol was added and the mixture was stirred for 15 minutes. The solvent was removed under reduced pressure and 18.2 g of the crude 2,4,6-trimethylphenole sodium salt was isolated. 18.2 g if the crude 2,4,6-trimethylphenole sodium salt was dissolved in 70 ml sulfolane. 16.9 g (0.1 mol) 1-bromo-1,1-dimethoxyethane was added and the reaction mixture was heated to 100°C. The reaction was allowed to continue at 100°C for four hours. The reaction mixture was allowed to cool down to room temperature. The precipitated salts were removed by filtration and 150 ml n.-hexane was added to the filtrate. The n.-hexane fraction was isolated and the sulfolane phase was extracted a second time with 150 ml n.-hexane. The n.-hexane fractions were pooled, dried over MgSO4 and evaporated under reduced pressure. 14.26 g (y : 64%) of INT-10.1 was isolated (TLC analysis on a Uniplate RP18 plate, eluent methanol/1M NaCl 70/30, Rf : 0.16). The purity of INT-10.1 was further checked using GC-analysis. No contaminants above 1% could be detected.

### The synthesis of INT-10.2

56.1 g (0.25 mol) of INT10.1 was dissolved in 200 ml methylene chloride, which was upfront dried over MgSO4. 69.1 g potassium carbonate was added, and the reaction mixture was cooled to - 3°C. 40 g (0.25 mol) bromine was dissolved in 150 ml methylene chloride and added to the reaction mixture at a speed of 20 ml/min, while maintaining the temperature in the reaction medium at - 3°C. The reaction was allowed to continue for one hour at - 3°C. 350 ml of a 1 M NaOH solution was added while maintaining the reaction temperature below 5°C. The mixture was stirred for 30 minutes, and the methylene chloride fraction was isolated. The methylene chloride fraction was washed with 100 ml of a saturated sodium sulfite solution, dried over MgSO4 and evaporated under reduced pressure. 72.9 g (y : 96 %) of INT-10.2 was isolated as a yellow oil (TLC analysis on a Uniplate RP18 plate, eluent methanol/1M NaCl 85/15, Rf : 0.31). INT10.2 was used without further purification.

### The synthesis of INT-10.3

60.4 g (0.2 mol) INT-10.2 was dissolved in 90 ml dry THF. The mixture was cooled to -78°C. 88 ml of a 2.5 M solution of BuLi in n.-hexane was added over one hour and fourty minutes while maintaining the temperature at -78°C. The reaction was allowed to continue for an additional 20 minutes at -78°C. A solution of 25.76 g (0.204 mol) diisopropyl carbodiimide in 40 ml dry THF was added over one hour, while maintaining the temperature at -78°C. The reaction was allowed to continue for an additional hour at -78°C. The reaction mixture was allowed to heat up to room temperature. 230.4 g (1.237 mol) methyl tosylate was added over 20 minutes, while the temperature of the reaction mixture gradually rose to 50°C. Upon completion of the addition, the reaction mixture was heated to 65°C. A heavy slurry was formed, which gradually restructured over 30 minutes while stirring became easier. The reaction mixture was heated until reflux and the reaction was allowed to continue at reflux for 16 hours. The reaction mixture was cooled down to room temperature, followed by the addition of 750 ml of a 1 M NaOH solution. The NaOH phase was isolated and extracted with 750 ml methyl tert.butyl ether. The NaOH phase was again isolated and extracted with one liter methylene chloride. The methylene chloride fraction was isolated, dried over MgSO4 and evaporated under reduced pressure. 26.75 g (y : 25 %) of INT-10.3 was isolated (TLC analysis on a Uniplate RP18 plate, eluent methanol/1M NaCl 80/20, Rf : 0.48). The structure of INT-10.3 was further confirmed using TLC-MS. A minor contaminant (CONT-3) was detected (Rf : 0.24), of which the structure is shown below.

Given the low concentration of the contaminant and the high structural similarity to the target structure, it was decided not to further purify INT-10.3.

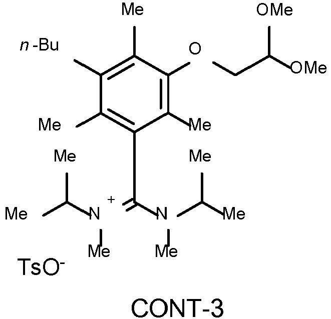

### The synthesis of EVOA-10A

1.09 g EVAL Resin SP521B (27 mol% ethylene) was dissolved in 9 ml dimethyl formamide at 110°C. After stirring for 60 minutes at 110°C, 0.096 g methane sulfonic acid was added followed by the addition of 1.06 g 2,2-dimethoxypropane and 2.75 g INT-10.3, dissolved in 5 ml dimethyl formamide. The reaction was allowed to continue for 16 hours at 90°C. The reaction was monitored using TLC chromatography on a Uniplate RP18 plate, using methanol/1M NaCl 80/20 as eluent. The reaction mixture was allowed to cool down to room temperature and 0.121 g tetramethyl guanidine was added. EVOA-10A was precipitated in 1 liter isopropyl acetate. The precipitated polymer was isolated and redissolved in 100 ml methylene chloride. The solution was added to 500 ml ethyl acetate and EVOA-10A was isolated. EVOA-10A was redissolved in methanol followed by evaporation under reduced pressure. 2.95 g of EVOA-was isolated. The structure was confirmed by 1H-NMR spectroscopy in CDCl3. The degree of acetalization was determined by 1H-NMR spectroscopy, where the first spectrum was measured in CDCl3 followed by a second measurement in CDCl3 after the addition of CF₃COOH to shift the OH protons in the spectrum. 40 mol% of the diols were converted into an acetal.

### The synthesis of EVOA-10B

1.223 g SOARNOL E3808 (38 mol% ethylene) was dissolved in 9 ml dimethyl formamide at 110°C. After stirring for 60 minutes at 110°C, 0.096 g methane sulfonic acid was added followed by the addition of 2.75 g INT-10.3, dissolved in 7 ml dimethyl formamide. The reaction was allowed to continue for 16 hours at 105°C. The reaction was monitored using TLC chromatography on a Uniplate RP18 plate, using methanol/1M NaCl 80/20 as eluent. The reaction mixture was allowed to cool down to room temperature and 0.121 g tetramethyl guanidine was added. EVOA-10B was precipitated in 1 liter ethyl acetate. The precipitated polymer was isolated and redissolved in 60 ml methanol. EVOA-10B was precipitated in 850 ml acetone. The polymer residue was treated twice with 250 ml acetone and dried. 2.42 g of EVOA-10B was isolated.

### Example 6: AEM membranes based on the cationic resins according to the present invention

A Teflon interlay was placed in a mold with a diameter of 4.2 cm. Each of the coating solutions, specified in Table 2, were casted into the mold and the mold was covered with a perforated foil to allow controlled evaporation of the solvent over 24 hours. The Teflon interlay and the casted membrane were removed from the mold and the Teflon interlay was separated from the membrane. All membranes manufactured in this way were flexible and easy to handle in dry state.

**Table 2**

| **Membrane** | **Polymer** | **Coating solution** |
|---|---|---|
| EVOAEM-1 | EVOA-1 | 200 mg in 1.5 g methanol |
| EVOAEM-2 | EVOA-2 | 200 mg in 1.5 g methanol |
| EVOAEM-3 | EVOA-4 | 300 mg in 1.9 g methanol |
| EVOAEM-4 | EVOA-7 | 200 mg in 2 g methanol |
| EVOAEM-5 | EVOA-10A | 400 mg in 4 g methanol |
| EVOAEM-6 | EVOA-10B | 400 mg in 4 g methanol |

The coating thickness of each sample was measured according to the following method. A sample of each membrane was mounted perpendicularly on a microscope slide, supplied by VWR. The thickness was measured using a Leica DMRX optical microscope, and the results are shown in Table 3.

**Table 3**

| **Membrane** | **Thickness (µm)** |
|---|---|
| EVOAEM-1 | 35 |
| EVOAEM-2 | 42 |
| EVOAEM-3 | 30 |
| EVOAEM-4 | 32 |
| EVOAEM-5 | 35 |
| EVOAEM-6 | 35 |

A sample of each membrane was submersed in a 2 M KOH solution for one month at room temperature. The integrity of the membranes was evaluated visually. All membranes kept their full integrity.

## Claims

1. An ethylene-vinyl alcohol (EVOH) copolymer comprising
(a) repeating units derived from ethylene,
(b) repeating units derived from vinyl alcohol, and
(c) repeating units represented by General Formula I and/or General Formula II, 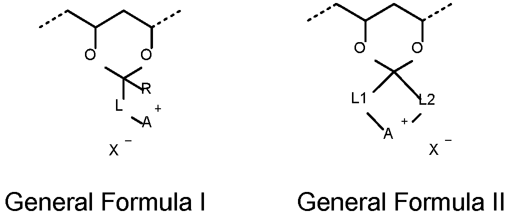 wherein
• L is a divalent linking group comprising not more than 20 carbon atoms;
• L1 and L2 are divalent linking groups comprising the necessary carbon atoms to form a five or six membered cationic ring with A+;
• A+ is a cationic group selected from the group consisting of ammonium, phosphonium and sulfonium;
• R is selected from the group consisting of a hydrogen, an alkyl group, an alkenyl group, an alkynyl group, an aralkyl group, an alkaryl group, an aryl or heteroaryl group, and a five- to eight-membered cyclic group;
• X- is an anion.

2. The copolymer according to claim 1, wherein A+ is an ammonium selected from the group consisting of tetraalkyl ammonium, sterically hindered (benz)imidazolium, guanidium and sterically hindered amidinium.

3. The copolymer according to claim 2, wherein A+ is a tetraalkyl ammonium selected from the group consisting of a pyrrolidinium group and a piperidinium group.

4. The copolymer according to claim 2, wherein A+ is a sterically hindered (benz)imidazolium or a sterically hindered amidinium represented by General Formula III 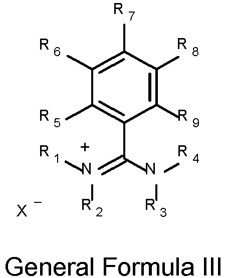 Wherein
• R₅ and R₉ are any substituent different from hydrogen;
• R₁ to R₄ are independently selected from the group consisting of an alkyl group, an alkenyl group, an alkynyl group, an aralkyl group, an alkaryl group, an aryl group and a heteroaryl group, or any of R₁ and R₃, R₁ and R₄, R₁ and R₂, R₃ and R₄, R₂ and R₃, or R₂ and R₄ represent the necessary atoms to form a five- to eight- membered ring;
• R₆ to R₈ are independently selected from the group consisting of hydrogen, an alkyl group, an alkenyl group, an alkynyl group, an aralkyl group, an alkaryl group, an aryl or heteroaryl group, a halogen group, an ether group, a nitro group, an amine group, or any of R₅ and R₆, R₆ and R₇, R₇ and R₈, or R₈ and R₉ represent the necessary atoms to form an optionally substituted five-to eight-membered ring;
• X⁻ is an anion;
• And wherein at least one of R₁ to R₉ comprises the necessary atoms to link the (benz)imidazolium or amidinium group to the copolymer.

5. The copolymer according to any of the preceding claims, having a molecular weight of at least 20.000.

6. The copolymer according to any of the preceding claims wherein the copolymer comprises at least 10 mol% ethylene units.

7. Method of making the copolymer according to any of the preceding claims, comprising:
i. Converting alcohol groups of poly(ethylene-co-vinyl alcohol) by acetalization or ketalization with a cationic group-functionalized acetal, ketal, aldehyde or ketone, wherein the cationic group is represented by A⁺.
or
i.' Converting alcohol groups of poly(ethylene-co-vinyl alcohol) by acetalization or ketalization with a reactive ketone, aldehyde, acetal or ketal;
ii.' Further functionalization of the modified poly(ethylene-co-vinyl alcohol) to introduce a cationic group represented by A⁺.

8. Method according to claim 7, wherein at least 20 mol% of the alcohol groups of poly(ethylene-co-vinyl alcohol) are converted.

9. A dispersion comprising the polymer according to any of claims 1 to 6.

10. An anion exchange membrane comprising the polymer as defined in any of claims 1 to 6.

11. The anion exchange membrane according to claim 10, provided with an electrocatalyst layer, wherein the electrocatalyst is selected from nickel, molybdenum, copper, iron, ruthenium, iridium, or platinum.

12. The anion exchange membrane according to claim 11, wherein the electrocatalyst layer further comprises the polymer according to any of the claims 1 to 6.

13. An electrochemical device comprising the anion exchange membrane according to any of the claims 10 to 12.

14. The electrochemical device according to claim 13, wherein the device is a water electrolyser, a fuel cell, a CO2-electrolyser, an electrodialyser, or a redox-flow battery.

15. Use of the anion exchange membrane according to any of the claims 10 to 12 in the production process of green hydrogen, green ammonia, or green steel.
